# EUROPEAN PATENT SPECIFICATION

(11) **EP 4 496 825 B1**
(45) Date of publication and mention of the grant of the patent: **15.10.2025**
(21) Application number: 22714346.8
(22) Date of filing: 21.03.2022
(51) Int. Cl.: C08G 59/62, C08G 65/336, C09J 163/00

(54) **A COMPOSITION**
EINE ZUSAMMENSETZUNG
UNE COMPOSITION

(43) Date of publication of application: 29.01.2025
(73) Proprietor: Wacker Chemie AG, 81671 München (DE)
(72) Inventor: KANG, Haigang, Shanghai 200233 (CN); CHEN, Jinqian, Shanghai 200233 (CN)
(74) Representative: Mieskes, Klaus Theoderich
(86) International application number: PCT/CN2022/081987
(87) International publication number: WO 2023/178472

(56) References cited:
- CN-A- 109 266 282
- CN-A- 112 778 951
- US-A1- 2016 040 048
- US-A1- 2021 292 617

## Description

### Technical field

The present invention relates to the field of bonding, in particular to the field of use in thermally conductive bonding.

### Background Technology

CN109337630A discloses a two-component thermally conductive structural adhesive, including silane-modified polyether, epoxy resin, plasticizer, thermally conductive filler, and flame-retardant filler. The composition is free of silicone resin components and possesses poor mechanical properties.

CN104293273A discloses an adhesive comprising silane-modified polyether, epoxy resin, calcium carbonate and other fillers. The thermal conductivity of this product is low. The composition contains no silicone resin component and has poor mechanical properties.

CN104583277B discloses a binder, which includes components such as silane-modified polyether, silicone resin and fillers. The adhesive properties of this product are not good enough. CN 109266282A discloses one-component composite silane-modified polyether thermal conductive adhesive useful in electronic industry for sealing, comprises silane-modified polyether resin, epoxy resin, plasticizer, surfactant, thixotropic agent.

### Invention Description

The invention discloses a composition, which has low viscosity and excellent operation performance before curing, and has the excellent characteristics of strong adhesive force, fast curing speed, low curing temperature and high thermal conductivity.

The present invention relates to a composition (M), which contains
Component (A) silane-crosslinking polymer,
Component (B1) epoxy resin,
Component (B2) epoxy resin curing agent,
Optional component (C) an organosilicon compound that not having nitrogen atoms bonded directly to carbonyl groups,
component (D) filler,
component (E) silicone resin,
wherein, the weight ratio of component (E) silicone resin to component (A) silane-crosslinking polymer is greater than or equal to 0.5, preferably between 0.55-5, more preferably between 0.6-4, such as 0.7, 0.8, 0.9, 1.0, 1.1, 1.2, 1.4, 1.6, 1.8, 2.0, 2.5, 3.0, 3.5.

The composition as described above, wherein the filling rate of the thermally conductive filler is greater than or equal to 0.80, preferably greater than or equal to 0.82, preferably greater than or equal to 0.84.

In the present invention, filling rate=total thermally conductive filler amount/total weight of the composition. Generally, the filling rate which is greater than or equal to 0.88 is considered as the high filling rate.

(B1) epoxy resin is one or more selected from the group consisting of the following components:
bisphenol A-type epoxy resin, a bisphenol F-type epoxy resin, a bisphenol S-type epoxy resin, a biphenyl-type epoxy resin, a naphthalene diol-type epoxy resin, and a phenol novolac-type epoxy resin, a cresol novolac-type epoxy resin, a bisphenol A novolac-type epoxy resin, a cycloaliphatic epoxy resin, and a heterocyclic epoxy resin (triglycidyl isocyanurate, diglycidyl hydantoin and the like), denatured epoxy resins obtained by denaturing these epoxy resins by a variety of materials, bromides and chlorides of these epoxy resins.

Preferably (B1) epoxy resins are selected from bisphenol A-type epoxy resin, a bisphenol F-type epoxy resin, a bisphenol S-type epoxy resin, a biphenyl-type epoxy resin, more preferably selected from bisphenol A-type epoxy resin.

As the epoxy resin (B1), one of these resins may be used singly, or two or more thereof may be used in combination.

**The** epoxy index of the (B1) epoxy resin is between 0.5 and 20 Eq/kg, preferably between 1 and 10 Eq/kg, more preferably between 3 and 8 Eq/kg.

**The** viscosity of the (B1) epoxy resin is between 5 000-40 000 mPa.s, preferably between 5 000-30 000 mPa.s, more preferably between 10 000-20 000 mPa.s.

(B2) epoxy resin curing agent, is a compound including an active group capable of reacting with an epoxy group.

(B2) epoxy resin curing agent is preferably compounds including an amino group, an acid anhydride group and a hydroxy phenyl group.

(B2) epoxy resin curing agent is one or more selected from the group consisting of the following components:
dicyandiamide and a derivative thereof; organic acid hydrazide; amine imide; aliphatic amine; aromatic amine; tertiary amine; salt of polyamine; micro capsule-type curing agent; an imidazole-type curing agent, acid anhydride; phenol novolac.

(B2) epoxy resin curing agent is preferably selected from aliphatic amine; aromatic amine; tertiary amine; an imidazole-type curing agent, more preferably selected from Dimethylamino cresol, benzyldimethylamine, 2-ethyl-4-methylimidazole, 2-methylimidazole, 2,4,6 tris(dimethylaminomethyl)phenol DMP-30, DMP- 20.

As (B2) epoxy resin curing agent, one of these agents may be used singly, or two or more thereof may be used in combination.

Moreover, a variety of curing promotors (B3) can be used in combination with the above-described (B2) epoxy resin curing agent.
curing promotors (B3) are one or more selected from the group consisting of the following components:
   a tertiary amine-based curing promotor; a urea derivative-based curing promotor; an imidazole-based curing promotor; and a 1,8-diazabicyclo[5.4.0]undec-7-ene (DBU)-based curing promotor; an organic phosphor-based curing promotor (for example, a phosphine-based curing promotor and the like); an onium salt-based curing promotor (for example, a phosphonium salt-based curing promotor, a sulfonium salt-based curing promotor, an ammonium salt-based curing promotor and the like); a metal chelate-based curing promotor, acid and metal salt-based curing promotor.
curing promotors (B3) are preferably one or more selected from a tertiary amine-based curing promotor; a urea derivative-based curing promotor; an imidazole-based curing promotor; and a 1,8-diazabicyclo[5.4.0]undec-7-ene (DBU)-based curing promotor; more preferably selected from a tertiary amine-based curing promotor.

As the curing promotors (B3), one of these agents may be used singly, or two or more thereof may be used in combination.

The composition as described above, wherein the component (D) the thermally conductive filler is selected from inorganic compounds with an average particle diameter D50 of less than 120 µm and a thermal conductivity of 1 W/m·K or more.

The thermal conductivity of the inorganic compound provided with the thermal conduction is preferably 10 W/m·K or more, more preferable 30 W/m·K or more. Moreover, as an inorganic compound provided with the electric insulating properties, an inorganic compound in which a volume resistivity at room temperature (25°C) is 10 Ω·cm or more can be used. Note that the volume resistivity of the inorganic compound provided with the electric insulating properties is preferably 10⁵ Ω·cm or more, more preferably 10⁸ Ω·cm or more, particularly preferably 10¹³ Ω·cm or more.

As the inorganic compound that combines the thermal conductivity and the electric insulating properties with each other, for example, there can be mentioned boride, carbide, nitride, oxide, silicide, hydroxide and the like. Specifically, for example, there are mentioned magnesium oxide (MgO), aluminum oxide (Al₂O₃), boron nitride (BN), aluminum nitride (AIN), aluminum hydroxide (Al(OH)₃) and the like. Moreover, there are also mentioned silicon dioxide (SiO₂), magnesium hydroxide (Mg(OH)₂), titanium oxide (TiO₂), zinc oxide (ZnO) and the like.

The composition as described above, component (D) comprising
5-20wt% (D-1) Thermal conductive fillers with an average particle size greater than or equal to 0.1 µm and less than or equal to 4 µm; preferably aluminum hydroxide and/or aluminum oxide,
for example (D-1) the average particle size is 0.8, 1.0, 1.2, 1.4, 1.6, 1.8, 2.0, 2.2, 2.4, 2.6, 2.8µm, and the content is 8wt%, 10wt%, 12wt%, 14wt%, 16wt%, 18wt%;
18-37wt% (D-2) Thermal conductive fillers with an average particle size greater than or equal to 4µm and less than or equal to 20µm; preferably aluminum hydroxide and/or aluminum oxide,
for example (D-2) the average particle size is 6, 8, 10, 12, 14, 16, 18 µm, and the content is 20wt%, 22wt%, 24wt%, 26wt%, 28wt%, 30wt%, 32wt%, 34wt%, 36wt%,
48-65wt% (D-3) thermal conductive fillers with an average particle size greater than or equal to 35 µm and less than or equal to 60 µm, preferably aluminum hydroxide and/or aluminum oxide,
for example (D-3) the average particle size is 82, 84, 86, 88, 90, 92, 94, 96, 98 µm, and the content is 50wt%, 52wt%, 54wt%, 56wt%, 58wt%, 60wt%, 62wt%, 64wt%,
wherein the (D) component is calculated as 100wt%.

The composition as described above, wherein the sum of the amount of all alumina is greater than 50wt%, preferably greater than 85wt%, more preferably greater than 88wt%, calculated based on the amount of all component (D) thermally conductive fillers being 100wt%.

The composition as described above, wherein the sum of the amount of all alumina is greater than 50wt%, preferably greater than 85wt%, more preferably greater than 88wt%, calculated based on the amount of all fillers being 100wt%.

The composition as described above, wherein the amount of spherical alumina is greater than or equal to 85wt%, preferably greater than or equal to 90wt%, calculated based on the amount of all components (D) thermally conductive fillers being 100wt%.

The composition as described above, wherein the thermal conductivity of the composition is greater than or equal to 2.0 W/ m·K, preferably greater than or equal to 2.2 W/ m·K, preferably greater than or equal to 2.3 W/ m·K, preferably greater than or equal to 2.4 W/ m·K, more preferably greater than or equal to 2.5 W/ m·K.

In the composition as described above, the aluminum hydroxides present in (D-1), (D-2) and (D-3) are all in amorphous form.

In the composition as described above, the alumina present in (D-1), (D-2) and (D-3) are all in spherical morphology.

The composition as above, wherein the amount of amorphous filler is less than 20wt%, preferably less than 15wt%, more preferably less than 10wt%, calculated based on the weight of the component (D) as 100wt%.

The composition as described above, wherein at least one of the aluminum hydroxides present in (D-1), (D-2) and (D-3) is surface-treated, preferably treated by component (T-1).

The composition as described above, wherein component (D) contains
5-20wt% (D-1) Aluminum hydroxide with an average particle size greater than or equal to 0.5µm and less than or equal to 3µm,
18-35wt% (D-2) alumina with an average particle size greater than or equal to 4µm and greater than or equal to 10µm,
50-65wt% (D-3) alumina with an average particle size greater than or equal to 35µm and greater than or equal to 50µm,
In (D-1), (D-2) and (D-3), it is calculated based on the component (D) as 100 wt%.

The composition as above, wherein the weight ratio of the surface-treated thermally conductive filler to the unsurface-treated thermally conductive filler is less than 0.3, preferably less than 0.2, more preferably less than 0.15.

The composition as above, wherein the weight ratio of (D-1)/(D-3) is between 0.2-0.4, preferably between 0.22-0.38, such as 0.25, 0.27, 0.29, 0.31, 0.33, 0.35.

The composition as described above, wherein the weight ratio of (D-2)/(D-3) is between 0.2-0.8, preferably between 0.25-0.75, preferably 0.3, 0.4, 0.5, 0.6, 0.7.

The composition as above, wherein the ratio of (D-2)/(D-1) average particle diameter is between 4.0-12.0, for example 4.5, 5.0, 5.5, 6.0, 6.5, 7.0, 7.5, 8.0.

The composition as above, wherein the ratio of (D-3)/(D-1) average particle diameter is between 30-100, for example 32, 35, 40, 45, 50, 55, 60.

The composition as above, wherein the ratio of (D-3)/(D-2) average particle diameter is between 7.0-12.0, preferably between 7.5-10, more preferably between 8.0-9.9, for example 8.2, 8.4, 8.6, 8.8, 9.0, 9.2, 9.4, 9.6, 9.8.

The definition of the average particle diameter refers to the value of the cumulative average particle diameter (D50 median diameter) measured by the particle size analyzer LS 13 320 manufactured by BECKMAN COULTER on a volume basis.

(D-1) the thermal conductive filler sample is prepared by the solution method. 0.1g (C-1) sample is placed in 10ml of absolute ethanol, dispersed by ultrasonic (100w) and stirred for 2 minutes, so that the aluminum hydroxide is fully dispersed. Take out 2-3 drops of sample solution and put them into the sample cell of the particle size analyzer.

(D-2) and (D-3) the thermal conductive filler samples (or other thermal conductive fillers with an average particle diameter greater than or equal to 3µm) are prepared by the dry powder method, and an appropriate amount of the sample dried at room temperature is placed into the loading cylinder of the particle size analyzer. Insert the loading cylinder into the detection slot of the device.

In the present invention, the particle size distribution of (D-1), (D-2) and (D-3) thermal conductive filler is unimodal, or their particle sizes meet unimodal or almost unimodal particle size distributions.

The almost unimodal particle size distributions in the present invention means that in the volume integral map of the measurement sample, there might be two or more peaks, but the volume integral area of the main peak accounts for more than 80% of the entire volume integral area, preferably more than 85%, more preferably more than 90%, more preferably more than 95%.

Spherical fillers, whose outer contour is generally spherical, are filler materials which are obtained from the amorphous fillers treated by chemical and/or physical (including heat treatment) processes.

Spherical alumina is a product obtained after heat treatment of amorphous alumina, and the outer contour is generally spherical.

Any component (D) thermally conductive filler used in the present invention has a water content of less than 1% by weight, preferably less than 0.5% by weight.

Preferably, the thermally conductive silicone composition further contains 1-100 parts by mass, preferably 1-50 parts by mass, more preferably 1-10 parts by mass of (T-1) component with respect to 100 parts by mass of (A) component.

(T-1) an alkoxysilane compound shown by the following formula (1); and

R¹ₐR²_{b}Si(OR³)_{4-a-b} (1)

wherein each R¹ independently represents an alkyl group having 1 to 24 carbon atoms, preferably 6 to 24 carbon atoms, more preferably 12 to 18 carbon atoms, each R² independently represents an unsubstituted or substituted hydrocarbon group having 1 to 10 carbon atoms, preferably methyl, ethyl, each R³ independently represents an alkyl group having 1 to 6 carbon atoms, preferably methyl, ethyl,
a represents an integer of 1 to 3, and b represents an integer of 0 to 2, provided that a+b is an integer of 1 to 3.

In the present invention, the weight ratio of (D) component and (T-1) component is between 100-800, preferably between 200-500, more preferably between 200-400.

Composition (M) as described above, its viscosity is less than or equal to 2,000,000 mPa.s, preferably less than or equal to 1,000,000 mPa.s, more preferably less than or equal to 800,000 mPa.s, more preferably less than or equal to 500,000 mPa.s, according to DIN 53019, at 25°C, the kinematic and static viscosities of the compositions of the present invention were obtained using an Anton Paar MCR302 instrument.

The viscosity of Composition (M) is measured right after mixing if Composition (M) is a two-component composition.

The composition (M) as described above, wherein the amount of component (A) silane-crosslinking polymer is 1-20wt%, preferably 1-15wt%, preferably 1-10wt%, more preferably 2-8wt%, more preferably 3-7wt%, more preferably 3-5wt%; based on the total amount of the compositions (M) is calculated as 100wt%.

The composition (M) as described above, wherein the sum of the amount of component (A) silane-crosslinking polymer and component (E) silicone resin is greater than 5wt%, preferably between 5 and 20wt%, more preferably between 5 and 15wt%, more preferably between 5 and 10wt%, for example 6, 7, 8, 9, based on the total amount of the compositions (M) is calculated as 100wt%.

The composition (M) as described above, wherein the amount of component (B1) epoxy resin is 1-20wt%, preferably between 1-10wt%, preferably between 2-8wt%, more preferably between 3-7wt%, more preferably between 4-7wt%, based on the total amount of the compositions (M) is calculated as 100wt%.

The composition (M) as described above, wherein the sum of component (B1) epoxy resin and component (B2) epoxy resin curing agent is greater than 5wt%, between 5-20wt%, more preferably between 5-15wt%, more preferably between 5-10wt%, for example 6, 7, 8, 9, based on the total amount of the compositions (M) is calculated as 100wt%.

The composition (M) as described above, wherein the weight ratio of component (B1) epoxy resin to component (B2) epoxy resin curing agent is between 2-50, preferably between 5-40, more preferably between 10-35, such as 13, 15, 17, 19, 21, 23, 25, 27, 29, 31, 33.

In the present invention, the person skill in the art can refer to the relevant chapters in "Epoxy Resin Application Principle and Technology" Sun Manling, Machinery Industry Press, 2002 to adjust the dosage between component (B1) epoxy resin and component (B2) epoxy resin curing agent.

The composition (M) as described above, wherein the sum of component (A) silane-crosslinked polymer, component (E) silicone resin, component (B1) epoxy resin and component (B2) epoxy resin curing agent is greater than 5wt%, preferably between 5-30wt%, more preferably between 5-20wt%, more preferably between 10-20wt%, based on the total amount of the compositions (M) is calculated as 100wt%.

Composition (M) as above, wherein the sum of component (A) silane-crosslinked polymer, component (E) silicone resin, component (B1) epoxy resin, component (B2) epoxy resin curing agent and the thermal conductive filler and component (D) is greater than 80wt%, preferably between 80-99wt%, more preferably between 90-98wt%, more preferably between 93-98wt%, based on the total amount of the compositions (M) is calculated as 100wt%.

The composition (M) as described above contains

| | |
|---|---|
| 1-20 wt% | component (A) silane-crosslinking polymer, |
| 1-20 wt% | component (B1) epoxy resin, |
| 0.1-1 wt% | component (B2) epoxy resin curing agent, |
| Optional | component (C) An organosilicon compound that not having nitrogen atomsbonded directly to carbonyl groups, |
| 75-85 wt% | component (D) thermally conductive filler, |
| 1-10 wt% | component (E) silicone resin, and the totalamount of all the compositions (M) is calculated as 100wt%. |

The composition (M) as described above contains

| | |
|---|---|
| 3-15 wt% | component (A) silane-crosslinking polymer, |
| 3-10 wt% | component (B1) epoxy resin, |
| 0.1-1 wt% | component (B2) epoxy resin curing agent, |
| Optional | component (C) An organosilicon compound that not having nitrogen atomsbonded directly to carbonyl groups, |
| 75-85 wt% | component (D) thermally conductive filler, |
| 3-10 wt% | component (E) silicone resin, |
| and the total amount of all the compositions (M) is calculated as 100wt%. | |

The composition (M) as described above contains

| | |
|---|---|
| 3-10 wt% | component (A) silane-crosslinking polymer, |
| 3-10 wt% | component (B1) epoxy resin, |
| 0.1-0.5 wt% | component (B2) epoxy resin curing agent, |
| 0.1-1 wt% | component (C) An organosilicon compound that not having nitrogen atomsbonded directly to carbonyl groups, |
| 75-85 wt% | component (D) thermally conductive filler, |
| 3-10 wt% | component (E) silicone resin, the total amountof all compositions (M) is calculated as 100 wt%. |

Composition (M) as described above, which is a two-component composition, wherein (B1) epoxy resin and component (B2) epoxy resin curing agent are not in the same package.

Composition (M) as described above, which is a two-component composition, wherein component (A) silane-crosslinked polymer and water are not in the same package.

Composition (M) as above, which is a two-component composition, comprising
Coamponent (M1)

| | |
|---|---|
| 3-10 wt% | component (A) silane-crosslinking polymer, |
| 0.1-0.5 wt% | component (B2) epoxy resin curing agent, |
| 0.1-1 wt% | component (C) An organosilicon compound that not having nitrogen atomsbonded directly to carbonyl groups, |
| 32.5-42.5 wt% | component (D) thermally conductive filler, |
| 3-10 wt% | component (E) silicone resin, |

Component (M2)

| | |
|---|---|
| 3-10 wt% | component (B1) epoxy resin, |
| 32.5-42.5 wt% | component (D) thermally conductive filler, |
| 0.1-0.5 wt% | water |

the total amount of all compositions (M) is calculated as 100wt%.

Composition (M) as described above, after curing at room temperature with 50% humidity, according to GB/T 7124-2008 24-hour initial bonding strength is greater than or equal to 1Mpa, 14-day final bonding strength is greater than or equal to 6Mpa.

The composition (M) described above, which contains component (A) silane-crosslinking polymers of the formula (1-1)

(HO)ₓ-Y-[O-CO-NH-(CR¹₂)_{b1}-SiRₐ(OR²)₃₋ₐ]₂₋ₓ (I-1)

wherein
Y is a divalent polymer radical,
R may be the same or different and is a monovalent, optionally substituted hydrocarbyl radical,
R¹ may be the same or different and is a hydrogen atom or a monovalent, optionally substituted hydrocarbyl radical,
R² may be the same or different and is a hydrogen atom or a monovalent, optionally substituted hydrocarbyl radical,
x is 0 or 1,
a may be the same or different and is 0, 1 or 2, preferably 0 or 1, more preferably 1, and
b1 is 1 or 3, preferably 1,
with the proviso that component (A) includes less than 15 mol %, preferably less than 10 mol %, more preferably less than 5 mol %, of polymers of the formula (1-1) with x=1.

In Formula (1-1), examples of R radicals are each independently alkyl radicals such as the methyl, ethyl, n-propyl, isopropyl, 1-n-butyl, 2-n-butyl, isobutyl, tert-butyl, n-pentyl, isopentyl, neopentyl, tert-pentyl radical; hexyl radicals such as the n-hexyl radical; heptyl radicals such as the n-heptyl radical; octyl radicals such as the n-octyl radical, isooctyl radicals and the 2,2,4-trimethylpentyl radical; nonyl radicals such as the n-nonyl radical; decyl radicals such as the n-decyl radical; dodecyl radicals such as the n-dodecyl radical; octadecyl radicals such as the n-octadecyl radical; cycloalkyl radicals such as the cyclopentyl, cyclohexyl, cycloheptyl radical and methylcyclohexyl radicals; alkenyl radicals such as the vinyl, 1-propenyl and 2-propenyl radical; aryl radicals such as the phenyl, naphthyl, anthryl and phenanthryl radical; alkaryl radicals such as o-, m-, p-tolyl radicals; xylyl radicals and ethylphenyl radicals; and aralkyl radicals such as the benzyl radical and the α- and β-phenylethyl radicals.

**In** Formula (1-1), examples of substituted R radicals are independently haloalkyl radicals such as the 3,3,3-trifluoro-n-propyl radical, the 2,2,2,2',2',2'-hexafluoroisopropyl radical and the heptafluoroisopropyl radical, and haloaryl radicals such as the o-, m- and p-chlorophenyl radical.

Preferably, the R radicals are each independently monovalent hydrocarbyl radicals optionally substituted by halogen atoms and having 1 to 6 carbon atoms, more preferably alkyl radicals having 1 or 2 carbon atoms, especially the methyl radical.

**In** Formula (1-1), examples of R¹ radicals are each independently a hydrogen atom, or the radicals specified for R.

Preferably, the R¹ radicals are each independently a hydrogen atom or a hydrocarbyl radical having 1 to 20 carbon atoms, especially a hydrogen atom.

**In** Formula (1-1), examples of R² radicals are independently a hydrogen atom or the examples given for the R radical.

Preferably, the R² radicals are each independently a hydrogen atom or an alkyl radical optionally substituted by halogen atoms and having 1 to 10 carbon atoms, more preferably an alkyl radical having 1 to 4 carbon atoms, especially the methyl or ethyl radical.

In Formula (1-1), examples of polymer radicals Y are independently polyester, polyether, polyurethane, polyalkylene and polyacrylate radicals.

The polymer radicals Y are preferably each independently organic polymer radicals containing, as a polymer chain, polyoxyalkylene such as polyoxyethylene, polyoxypropylene, polyoxybutylene, polyoxytetramethylene, polyoxyethylenepolyoxypropylene copolymer and polyoxypropylene-polyoxybutylene copolymer; hydrocarbon polymers such as polyisobutylene and copolymers of polyisobutylene with isoprene; polychloroprenes; polyisoprenes; polyurethanes; polyesters; polyamides; polyacrylates; polymethacrylates; vinyl polymer and/or polycarbonates.

More preferably, the Y radicals are each polyoxyalkylene radicals, more preferably linear polyoxyalkylene radicals.

The polymers of the formula (1-1) used in accordance with the invention are preferably prepared by reacting polymers of the formula

HO-Y-OH (V)

with silanes of the formula

OCN-(CR¹₂)_{b1}-SiRₐ(OR²)₃₋ₐ (VI-1)

where all the radicals and indices have one of the definitions according to formula (I-1). What is crucial is that this reaction achieves substantially complete termination of the chain ends present.

The polymer systems in which virtually all the OH functions have been substantially completely terminated with isocyanate-functional silanes of the formulae (VI-1) have better curable properties.

Suitable processes for preparing a corresponding component (A) and also examples of component (A) itself are described, inter alia, in EP 1 535 940 B1 (paragraphs [0005]-[0025] and examples 1-3 and comparative examples 1-4) or EP 1 896 523 B1 (paragraphs [0008]-[0047]), which form part of the disclosure content of the present application.

The compounds (A) used in accordance with the invention may be prepared separately and not mixed with one another until the provision of the compositions (M) of the invention. However, they can also be prepared together by reacting a mixture of polyols of the formulae (V) together with isocyanate-functional silanes of the formulae (VI-1).

The mean molecular weights Mₙ of the compounds (A) is at least 5,000 g/mol, preferably at least 10,000 g/mol, more preferably at least 11,000 g/mol, and preferably at most 30,000 g/mol, more preferably at most 24,000 g/mol and especially at most 22,000 g/mol.

The number-average molar mass Mₙ was determined by means of size exclusion chromatography (SEC) against a polystyrene standard, in THF, at 60° C., flow rate 1.2 mL/min and RI detection (refractive index detector) on a Styragel HR3-HR4-HR5-HR5 column set from Waters Corp. USA with an injection volume of 100 µl.

The viscosity of components (A) is preferably at least 0.2 Pas, more preferably at least 1 Pas, and most preferably at least 5 Pas, and preferably at most 700 Pas, more preferably at most 100 Pas.

The components (A) used in accordance with the invention may contain just one type of compound of the formula (I-1), or else mixtures of different types of compounds of the formula (1-1).

For example,
the silane end groups in the component (A1) is b1=1, R¹=H and a=1, and
the silane end groups in the component (A2) is b1=3, R¹=H and a=0;

In a particular embodiment, the compositions (M) of the invention contain polymers (A1) in which, in at least 70% of all the silane end groups, preferably in at least 90% of all the silane end groups, b1= 1, R¹ = H and a = 1, and component (E) silicone resin.

In a further particular embodiment, the compositions (M) of the invention contain polymers (A2) in which, in at least 70% of all the silane end groups, preferably in at least 90% of all the silane end groups, b1=3, R¹=H and a=0, and component (E) silicone resin.

In a further particular embodiment, the compositions (M) of the invention contain polymers (A1) and polymers (A2) at the same time.

The compositions (M) of the invention may comprise, in addition to components (A1)/(A2), component (E) silicone resin, further substances, for example (C) organosilicon compounds not having nitrogen atoms bonded directly to carbonyl groups, (H) water scavengers, and (J) additives.

The organosilicon compounds (C) not having nitrogen atoms bonded directly to carbonyl groups which are optionally present in the compositions (M) of the invention are preferably organosilicon compounds containing units of the formula

DₑSi(OR⁷)_{f}R⁸_{g}O_{(4-e-f-g)/2} (III)

in which
R⁷ may be the same or different and is a hydrogen atom or optionally substituted hydrocarbyl radicals,
D may be the same or different and is a monovalent, SiC-bonded radical not having nitrogen atoms bonded directly to a carbonyl group,
R⁸ may be the same or different and is a monovalent, optionally substituted, SiC-bonded, nitrogen-free organic radical,
e is 0, 1, 2, 3 or 4, preferably 1,
f is 0, 1, 2 or 3, preferably 1, 2 or 3, more preferably 2 or 3, and
g is 0, 1, 2 or 3, preferably 1 or 0,
with the proviso that the sum total of e+f+g is less than or equal to 4 and at least one D radical is present per molecule.

The organosilicon compounds (C) used in accordance with the invention may be either silanes, i.e. compounds with e+f+g=4, or siloxanes, i.e. compounds containing units with e+f+g≤3, preferably silanes.

Examples of optionally substituted hydrocarbyl radicals R⁷ are the examples given for the R radical.

The R⁷ radicals are preferably a hydrogen atom or a hydrocarbyl radical optionally substituted by halogen atoms and having 1 to 18 carbon atoms, more preferably a hydrogen atom or a hydrocarbyl radical having 1 to 10 carbon atoms, especially the methyl or ethyl radical.

Examples of the R⁸ radical are the examples given for R.

The R⁸ radical preferably comprises hydrocarbyl radicals optionally substituted by halogen atoms and having 1 to 18 carbon atoms, more preferably hydrocarbyl radicals having 1 to 5 carbon atoms, especially the methyl radical.

Preferably, D radicals are radicals selected from H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁ NH(CH₂)₃-, phenyl-NH(CH₂)₃-, (CH₃)₂N(CH₂)₃-, (C₂H₁₅)₂N(CH₂)₃-, (C₃H₇)₂N(CH₂)₃-, (C₄H₉)₂N(CH₂)₃, (C₅H₁₁)₂N(CH₂)₃, (C₆H₁₃)₂N(CH₂)₃, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, phenyl-NH(CH₂)-, (CH₃)₂N(CH₂)-, (C₂H₅)₂N(CH₂)-, (C₃H₇)₂N(CH₂)-, (C₄H₉)₂N(CH₂)-, (C₅H₁₁)₂N(CH₂)-, (C₆H₁₃)₂N(CH₂)-, (C₇H₁₅)₂N(CH₂)-, (CH₃O₃Si(CH₂)₃NH(CH₂)₃-, (C₂H₅O₃Si(CH₂)₃NH(CH₂)₃-, (CH₃O)₂(CH₃)Si(CH₂)₃NH(CH₂)₃ and (C₂H₅O)₂(CH₃)Si(CH₂)₃NH(CH₂)₃-, and also reaction products of the abovementioned primary amino groups with compounds having epoxy groups or double bonds reactive toward primary amino groups. Preferably, the D radical is the H₂N(CH₂)₃-, H₂N(CH₂)₂NH(CH₂)₃- or cyclo-C₆H₁₁NH(CH₂)₃- radical.

Preferably, the silanes of the formula (III) used in accordance with the invention are selected from H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-CH₁₁NH(CH₂)₃-Si(OC₂H₅)₃, cyclo-C₆H₁₁ NH(CH₂)₃-Si(OCH₃)₂CH₃, cyclo-CH₁₁NH(CH₂)₃-Si(OC₂H₅)₂CH₃, phenyl-NH(CH₂)₃-Si(OCH₃)₃, phenyl-NH(CH₂)₃-Si(OC₂H₅)₃, phenyl-NH(CH₂)₃-Si(OCH₃)₂CH₃, phenyl-NH(CH₂)₃-Si(OC₂H₅)₂CH₃, HN((CH₂)₃-Si(OCH₃)₃)₂, HN((CH₂)₃-Si(OC₂H)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂Hₛ)₃, cyclo-CH₁₁NH(CH₂)-Si(OCH₃)₂CH₃, cyclo-C₆H₁₁NH(CH₂)-Si(OC₂Hₛ)₂CH₃, phenyl-NH(CH₂)-Si(OCH₃)₃, phenyl-NH(CH₂)-Si(OC₂H₅)₃, phenyl-NH(CH₂)-Si(OCH₃)₂CH₃, phenyl-NH(CH₂)-Si(OC₂H₅)₂CH₃, and also the partial hydrolyzates thereof, preference being given to H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-CeH₁₁NH(CH₂)₃-Si(OCH₃)₃, cyclo-CH₁₁NH(CH₂)₃-Si(OC₂H₅)₃ and cyclo-CH₁₁ NH(CH₂)₃-Si(OCH₃)₂CH₃ and the partial hydrolyzates of each, and particular preference to H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OCH₃)₂CH₃, cyclo-CeH₁₁NH(CH₂)₃-Si(OCH₃)₃, cyclo-CH₁₁NH(CH₂)₃-Si(OCH₃)₂CH₃ and the partial hydrolyzates of each.

The organosilicon compounds (C) optionally used in accordance with the invention may also assume the function of a curing catalyst or cocatalyst in the compositions (M) of the invention.

In addition, the organosilicon compounds (C) optionally used in accordance with the invention may act as adhesion promoters and/or as water scavengers.

The organosilicon compounds (C) optionally used in accordance with the invention are commercial products or are preparable by the standard chemical methods.

If the compositions (M) of the invention contain component (C), amounts thereof are preferably 0.01 to 25 parts by weight, more preferably 2 to 20 parts by weight, and especially 5 to 18 parts by weight, especially 10 to 16 parts by weight, based on 100 parts by weight of components (A) in each case. The compositions (M) of the invention preferably contain component (C).

The composition (M) used in the present invention may also comprise (Q1) and/or (Q2) non-thermally conductive fillers.
(Q1) non-reinforcing fillers, i.e. fillers having a BET surface area of preferably up to 50 m²/g, such as diatomaceous earth, calcium silicate, zirconium silicate, talc, kaolin, zeolites, barium sulfate, precipitated and/or ground chalk which may be either coated or uncoated, gypsum, silicon nitride, silicon carbide, boron nitride, glass and polymer powder, such as polyacrylonitrile powder;
(Q2) reinforcing fillers, i.e. fillers having a BET surface area of more than 50 m²/g, such as fumed silica, precipitated silica, precipitated chalk, carbon black, such as furnace black and acetylene black, and mixed silicon-aluminum oxides of high BET surface area; fillers in the form of hollow spheres, such as ceramic microbeads, for example those obtainable under the Zeeospheres^{™} trade name from 3M Deutschland GmbH in Neuss, Germany, elastic polymer beads, for example those obtainable under the EXPANCEL^{®} trade name from AKZO NOBEL, Expancel in Sundsvall, Sweden, or glass beads; fibrous fillers, such as asbestos and polymer fibers. The fillers mentioned may be hydrophobized, for example by treatment with organosilanes or -siloxanes or with stearic acid, or by etherification of hydroxyl groups to alkoxy groups.

In the composition of the present invention, the amount of component (Q1) non-reinforcing filler and component (Q2) reinforcing filler is less than 1 wt%, preferably less than 0.1 wt%, calculated based on the weight of the composition as 100 wt%.

Any silicone resins (E) present in the compositions (M) of the invention containing in formula (II):

R³_{c}(R⁴O)_{d}SiO_{(4-c-d)/2} (II)

wherein
R³ can be the same or different, and represents a hydrogen atom or an optionally substituted monovalent hydrocarbon group bonded with SiC,
R⁴ may be the same or different and represents a hydrogen atom or an optionally substituted monovalent hydrocarbon group,
c is 0, 1, 2 or 3, and
d is 0, 1, 2 or 3,
wherein the sum of c+d is less than or equal to 3; and c is equal to 0 or 1 in at least 50%, preferably at least 85%, more preferably at least 90%, of the units of formula (II).

The silicone resin (E) preferably contains at least 95% by weight of units of formula (II). It is particularly preferred that the silicone resin (E) consists only of the unit of formula (II).

In formula (II), Examples of radicals R³ are the examples specified above for R in formula (1-1).

Radical R³ preferably comprises monovalent, SiC-bonded aliphatic or aromatic hydrocarbon radicals which are optionally substituted by halogen atoms and which have 1 to 18 carbon atoms, more preferably the methyl or phenyl radical. In particular, all radicals R³ are exclusively methyl and phenyl radicals.

In formula (II), Examples of radical R⁴ are hydrogen atom or the examples specified for radical R in formula (1-1).

Radical R⁴ preferably comprises hydrogen atom or alkyl radicals having 1 to 10 carbon atoms that are optionally substituted by halogen atoms, more preferably hydrogen atom or alkyl radicals having 1 to 4 carbon atoms, more preferably the methyl, ethyl, or butyl radical, most preferably the methyl radical.

Phenylsilicone resins are used with preference as resins (E). Most preferably, the phenylsilicone resins (E) consist exclusively of units of the formula (II) in which at least 10%, preferably at least 50%, more preferably at least 60% of all units of the formula (II) have at least one SiC-bonded phenyl group.

Employed with preference are silicone resins (E) in which c+d is less than 3.

In one embodiment, phenylsilicone resins (E) are used which contain, based on the total number of units of the formula (II) in each case, at least 50%, more preferably at least 60%, of units of the formula (II) in which c is 1.

In one preferred embodiment, silicone resins (E) are used which have exclusively units of the formula (II) in which c is 0, 1, or 2, with the proviso that c is equal to 0 or 1 in at least 50% of the units of the formula (II).

In one preferred embodiment, silicone resins (E) are used which have exclusively units of the formula (II) in which c is 1 or 2.

In one specific embodiment, silicone resins (E) are used which have exclusively units of the formula (II) in which c is 1.

Preference is given to using silicone resins (E) which have, based on the total number of units of the formula (II) in each case, at least 70%, more preferably at least 80%, of units of the formula (II) in which d is 0 or 1.

Preference is given to using silicone resins (E) which, based on the total number of units of the formula (II) in each case, have 30% to 95%, more preferably 30% to 90%, of units of the formula (II) in which d is 0.

Examples of silicone resins (E) are organopolysiloxane resins which consist substantially, preferably exclusively, of (Q) units of the formulae SiO_{4/2}, Si(OR⁴)O_{3/2}, Si(OR⁴)₂O_{2/2}, and Si(OR⁴)₃O_{1/2}, (T) units of the formulae PhSiO_{3/2}, PhSi(OR⁴)O_{2/2}, and PhSi(OR⁴)₂O_{1/2}, (D) units of the formulae Me₂SiO_{2/2} and Me₂Si(OR⁴)O_{1/2}, and also (M) units of the formula Me₃SiO_{1/2}, where Me is the methyl radical, Ph is the phenyl radical, and R⁴ is the methyl, ethyl, or butyl radical, preferably the methyl radical, with the resin containing preferably 0-2 mol of (Q) units, 0-2 mol of (D) units, and 0-2 mol of (M) units per mol of (T) units.

Preferred examples of silicone resins (E) are organopolysiloxane resins which consist substantially, preferably exclusively, of T units of the formulae PhSiO_{3/2}, PhSi(OR⁴)O_{2/2}, and PhSi(OR⁴)₂O_{1/2}, and T units of the formulae MeSiO_{3/2}, MeSi(OR⁴)O_{2/2}, and MeSi(OR⁴)₂O_{1/2}, and also, optionally, D units of the formulae Me₂SiO_{2/2} and Me₂Si(OR⁴)O_{1/2}, where Me is the methyl radical, Ph is the phenyl radical, and R⁴ is the methyl, ethyl, or butyl radical, preferably the methyl radical. The molar ratio of phenylsilicone to methylsilicone units is between 0.5 and 2.0. The amount of D units in these silicone resins is preferably below 10 wt %.

Additionally, in preferred examples of silicone resins (E), the sum of T units of the formulae PhSiO_{3/2}, PhSi(OR⁴)O_{2/2}, and PhSi(OR⁴)₂O_{1/2} accounts for more than 90wt% of all units of silicone resins (E), preferably more than 95wt%, More preferably 99 wt% or more, where Ph is the phenyl radical and R⁴ is the methyl, ethyl, or butyl radical, preferably the methyl radical, calculated on the basis of all units of silicone resin (E) as 100wt%.

The silicone resins (E) preferably possess a number-average molar mass Mₙ of at least 400 g/mol and more preferably of at least 600 g/mol. The average molar mass Mₙ is preferably not more than 400,000 g/mol, more preferably not more than 100,000 g/mol, most preferably not more than 50,000 g/mol. The silicone resins (E) may be either solid or liquid at 23° C. and 1000 hPa, with liquid silicone resins being preferred.

The silicone resins (E) may be used either in pure form or in the form of a solution in a suitable solvent.

However, it is preferable to use silicone resin (E) that does not contain an organic solvent.

Catalysts (F) used in the compositions (M) of the invention may be any desired catalysts known to date for compositions that cure through silane condensation.

Metal-containing curing catalysts (F) are selected from organic titanium and tin compounds, preferably selected from the group consists of titanic esters, tetrabutyl titanate, tetrapropyl titanate, tetraisopropyl titanate, titanium tetraacetylacetonate; dibutyltin dilaurate, dibutyltin maleate, dibutyltin diacetate, dibutyltin dioctanoate, dibutyltin acetylacetonate, dibutyltin oxides, and corresponding dioctyltin compounds.

Metal-free curing catalysts (F) are selected from basic compounds, preferably selected from the group consists of triethylamine, tributylamine, 1,4-diazabicyclo[2.2.2]octane, 1,5-diazabicyclo[4.3.0]non-5-ene, 1,8-diazabicyclo[5.4.0]undec-7-ene, N,N-bis(N,N-dimethyl-2-amino-ethyl)methylamine, pentamethylguanidine, tetramethylguanidine and further guanidine derivatives, N,N-dimethylcyclohexylamine, N,N-dimethylphenylamine and N-ethylmorpholine.

It is likewise possible to use, as catalyst (F), acidic compounds, for example phosphoric acid and esters thereof, toluenesulfonic acid, sulfuric acid, nitric acid, or else organic carboxylic acids, for example acetic acid and benzoic acid.

If the compositions (M) of the invention contain catalysts (F), the amounts are preferably less than or equal to 1 parts by weight, more preferably less than or equal to 0.1 parts by weight, more preferably less than or equal to 0.01 parts by weight, based on 100 parts by weight of component (A) in each case. Preferably the compositions (M) of the invention does not contain catalysts (F).

If the compositions (M) of the invention comprise adhesion promoters (G), the adhesion promoters (G) may be any desired adhesion promoters described to date for systems that cure through silane condensation.

Examples of adhesion promoters (G) are epoxysilanes such as glycidoxypropyltrimethoxysilane, glycidoxypropylmethyldimethoxysilane, glycidoxypropyl triethoxysilane or glycidoxypropyl-methyldiethoxysilane, 2-(3-triethoxysilylpropyl)maleic anhydride, N-(3-trimethoxysilylpropyl)urea, N-(3-triethoxysilylpropyl)urea, N-(trimethoxysilylmethyl) urea, N-(methyl-dimethoxysilylmethyl) urea, N-(3-triethoxysilylmethyl) urea, N-(3-methyldiethoxysilylmethyl) urea, O-(methylcarbamatomethyl)- methyldimethoxysilane, O-(methylcarbamatomethyl) trimethoxysilane, O-(ethylcarbamatomethyl)methyl diethoxysilane, O-(ethyl-carbamatomethyl)- triethoxysilane, 3-methacryloyloxypropyltrimethoxysilane, methacryloyloxymethyl trimethoxysilane, methacryloyloxymethyl methyldimethoxysilane, methacryloyloxy-methyltriethoxysilane, methacryloyloxymethylmethyldiethoxy-silane, 3-acryloyloxypropyltrimethoxysilane, acryloyloxymethyl-trimethoxysilane, acryloyloxymethyl methyldimethoxysilane, acryloyloxymethyltriethoxysilane and acryloyloxymethyl-methyldiethoxysilane, and the partial condensates thereof.

If the compositions (M) of the invention comprise adhesion promoters (G), the amounts are preferably lower than or equal to 3 parts by weight, more preferably lower than or equal to 1.5 parts by weight, based on 100 parts by weight of compositions (M) in each case.

The water scavengers (H) used in the compositions (M) of the invention may be any desired water scavengers described for systems that cure through silane condensation.

Examples of water scavengers (H) are silanes such as vinyltrimethoxysilane, vinyltriethoxysilane, vinylmethyl-dimethoxysilane, O-(methylcarbamatomethyl) methyl dimethoxysilane, O-(methylcarbamatomethyl)trimethoxysilane, O-(ethyl-carbamatomethyl) methyldiethoxysilane, and also O-(ethyl-carbamatomethyl)triethoxysilane, and/or the partial condensates thereof, and also orthoesters, such as 1,1,1-trimethoxyethane, 1,1,1-triethoxyethane, trimethoxymethane and triethoxymethane.

If the compositions (M) of the invention comprise water scavengers (H), the amounts are less than or equal to 1 part by weight, more preferably less than or equal to 0.3 parts by weight, based on 100 parts by weight of compositions (M) in each case. The compositions of the invention preferably do not comprise water scavengers (H).

If the compositions (M) of the invention comprise the unreactive plasticizers (I), the unreactive plasticizers (I) may be any desired plasticizers that are known to date and are typical of silane-crosslinking systems.

Unreactive plasticizers (I) are selected from the group consists of phthalic esters (dioctyl phthalate, diisooctyl phthalate and diundecyl phthalate), perhydrogenated phthalic esters (diisononyl cyclohexane-1,2-dicarboxylate and dioctyl cyclohexane-1,2-dicarboxylate), adipic esters (dioctyl adipate), benzoic esters, glycol esters, esters of saturated alkanediols (2,2,4-trimethylpentane-1,3-diol monoisobutyrate and 2,2,4-trimethylpentane-1,3-diol diisobutyrate), phosphoric esters, sulfonic esters, polyesters, polyethers (polyethylene glycols and polypropylene glycols preferably having molar masses Mₙ of 400 to 10 000 g/mol), polystyrenes, polybutadienes, polyisobutylenes, methyl dimethicone, phenyl dimethicone, trifluoromethyl dimethicone, hydroxy dimethicone, mineral oil, paraffinic hydrocarbons and high molecular weight branched hydrocarbons.

Preferably, the unreactive plasticizer (I) is selected from group consisting of polyoxypropylene monohydric alcohol, polyoxypropylene glycol, polyoxyethylene monohydric alcohol, polyoxyethylene glycol, polyoxypropylene-polyoxyethylene block copolymer, polyether polyols and terminal modification of the above.

The amount of any non-reactive plasticizer (I) in the composition (M) of the present invention is less than 1wt%, preferably less than 0.5wt%, more preferably less than 0.1wt%; based on the component (A) silane-crosslinking polymer calculated at 100wt%. The composition (M) of the present invention preferably does not contain any non-reactive plasticizer (I).

Additives (J) used in the compositions (M) of the invention may be any desired typical additives useful in silane-crosslinking systems.

The additives (J) used in accordance with the invention are preferably antioxidants, UV stabilizers, for example what are called HALS compounds, fungicides and pigments.

If the compositions (M) of the invention contain additives (J), the amounts are preferably 0.01 to 30 parts by weight, more preferably 0.1 to 10 parts by weight, based on 100 parts by weight of components (A) in each case. The compositions (M) of the invention preferably contain additives (J).

The admixtures (K) used in accordance with the invention are preferably tetraalkoxysilanes, for example tetraethoxysilane, and/or partial condensates thereof, rheology additives, flame retardants and organic solvents.

Preferred reactive plasticizers (K) are compounds containing alkyl chains having 6 to 40 carbon atoms and having a group reactive toward the compounds (A1)/(A2). Examples are isooctyltri-methoxysilane, isooctyltriethoxysilane, N-octyltrimethoxy-silane, N-octyltriethoxysilane, decyltrimethoxysilane, decyltriethoxysilane, dodecyltrimethoxysilane, dodecyltriethoxysilane, tetradecyltrimethoxysilane, tetradecyltriethoxysilane, hexadecyltrimethoxysilane and hexadecyltriethoxysilane.

The rheology additives (K) are preferably polyamide waxes, hydrogenated castor oils or stearates.

Examples of organic solvents (K) are low molecular weight ethers, esters, ketones, aromatic and aliphatic and optionally halogenated hydrocarbons and alcohols, preference being given to the latter.

The dosage of organic solvents (K) is less than 1 parts by weight, preferably less than 0.1 parts by weight, based on 100 parts by weight of components (A). Preferably no organic solvents (K) are added to the compositions (M) of the invention.

The compositions (M) of the invention are moisture-curing, meaning that they are preferably liquid or pasty compositions which cure on contact with water and/or atmospheric humidity.

The use of the compositions (M) in curable composition.

The composition (M) of the present invention can be cured under room temperature conditions and has a suitable pot life. The pot life is shorter than 10 hours, preferably shorter than 5 hours.

The compositions of the invention (M) can be produced in any manner known per se, for instance by standard methods and mixing processes for production of moisture-curing compositions.

The present invention further provides a process for producing the compositions (M) of the invention by mixing the individual components in any desired sequence.

Preferably, the catalytically active components (C) and/or (F) are not added until the end of the mixing operation.

This mixing operation can be affected at room temperature, i.e. at temperatures between 0 and 30° C, and pressure of the surrounding atmosphere, i.e. about 900 to 1100 hPa. If desired, this mixing can alternatively be affected at higher temperatures, for example at temperatures in the range from 30 to 130° C. In addition, it is possible to mix intermittently or constantly under reduced pressure, for example at absolute pressures of 30 to 500 hPa, in order to remove volatile compounds and/or air.

The mixing operation of the invention is preferably affected with exclusion of moisture.

The process of the invention can be performed continuously or batchwise.

The compositions (M) of the invention are one-component compositions which are storable with exclusion of water and crosslinkable at room temperature on ingress of water.

Alternatively, the compositions (M) of the invention are one part of two-component crosslinking systems, in which OH-containing compounds, such as water, are added in a second component.

The compositions (M) of the invention is two-component crosslinking system, wherein the weight ratio of the first component to the second component is (0.1-50):1, preferably between (0.5-30):1, more preferably (0.5-8):1, more preferably (0.8-1.2):1.

The first component contains: the composition (M1) of the present invention,

The second component contains: optional a catalyst (F) and an OH compound, wherein the OH compound includes water, preferably the OH compound is water.

The composition (M) of the invention is a two-component crosslinking system, wherein the viscosity of the first component is between 500-500,000 cP, preferably between 10,000-300,000 cP, preferably between 20,000-200,000 cP, more preferably between 30,000-100,000 cP.

The viscosity of the second component is between 10,000-1,500,000 cP, preferably between 50,000-1,200,000 cP, more preferably between 250-1,000,000 cP, or 300,000 cP, 500,000 cP, 600,000 cP, 700,000 cP, 900,000 cP.

The water content in the compositions (M) of the invention is 0.01-15 parts by weight, preferably 0.01-10 parts by weight, more preferably 0.1-10 parts by weight, more preferably 6-10 parts by weight, or 0.6, 0.8, 2, 3, 4, 5, 6, 7, 8, 9 parts by weight, based on 100 parts by weight of components (A).

A dual cure product could be produced by crosslinking the above composition (M).

The compositions (M) of the invention are preferably crosslinked at room temperature. They can, if desired, also be crosslinked at higher or lower temperatures than room temperature, for example at -5 to 15° C. or at 30 to 50° C.

Preference is given to conducting the crosslinking at a pressure of 100 to 1100 hPa, especially under the pressure of the surrounding atmosphere, i.e. about 900 to 1100 hPa.

The present invention further provides a method of coating and/or caulking and/or potting, wherein the composition (M) according to the invention is applied and/or caulked and/or potted into gaps between substrates and/or electronic devices before being crosslinked and/or cured.

Electronic devices include cells, battery modules, battery packs, sensors, actuators, wireless power supplies, photovoltaic devices, wireless transmitters, antennas, nano-electromechanical systems, and micro-electromechanical systems.

The substrates include metal substrates, polymer substrates, and inorganic material substrates, and the substrates are preferably copper, aluminum, aluminum-magnesium alloys, metal oxides, ceramics, PET films, and ceramic PCB circuit boards.

The present invention further provides products obtained by the above method.

The use of the above-mentioned composition (M) in the field of batteries, preferably in the field of power batteries, more preferably in CTP batteries (CELLtoPACK battery), module-free battery, blade battery, honeycomb battery.

In the examples described hereinafter, all the viscosities are at a temperature of 25° C. Unless stated otherwise, the examples which follow are conducted at a pressure of the surrounding atmosphere, i.e. at about 1000 hPa, and at room temperature, i.e. at about 23° C., or at a temperature which is established on combination of the reactants at room temperature without additional heating or cooling, and at a relative air humidity of about 50%. In addition, all figures for parts and percentages, unless stated otherwise, are based on weight.

### Embodiments

Sample (A1), a silane-crosslinking polymer, Polypropylene glycol with silane end capping at both ends and an average molar mass Mn of 8 000-20 000 g/mol and the formula -O-C(=O)-NH-(CH₂)-SiMe(OCH₃)₂ as end groups, belongs to component (A) silane-crosslinked polymer,
Aminopropyltrimethoxysilane, belongs to component (C) an organosilicon compound that not having nitrogen atoms bonded directly to carbonyl groups,
silicone resin 1, containing T unit, methyl and phenyl, Mw 1000-2000 g/mol, viscosity 250-350 mm²/s, belongs to component (E) silicone resin,
Above materials are provided by WACKER CHEMIE AG.

Bisphenol A epoxy resin, bisphenol A diglycidyl ether CAS 1675-54-3, epoxy value Epoxide index 5.42 Eq/kg, viscosity 14,661 mPa.s, belongs to Component (B1) epoxy resin,
DMP-30, 2,4,6 Tris(dimethylaminomethyl) phenol, belongs to Component (B2) epoxy resin curing agent,
(D-1) Aluminum hydroxide with an average particle size of 1.5 µm, surface treated with component (T-1),
(D-2) Spherical alumina with an average particle size of about 5.5 µm,
(D-3) Spherical alumina with an average particle size of about 40 µm,

The above substances are commercially available.

The thermal conductivity of the samples was tested according to ASTM D5470 using a TIM Tester 1300 manufactured by Analysis Tech Inc.

### Example of preparation method

The components listed in Table 1 were charged into a reaction vessel equipped with stirring, cooling and heating devices. At room temperature, mix the liquid material uniformly, and then add the powder material to the liquid material. But aminopropyltrimethoxysilane and DMP-30 should be added last. Then remove the water and set aside for later use.

The raw materials and dosages in each example and comparative example are shown in Table 1.

**Table 1**

| | Ex.1 | C.Ex.2 | C.Ex.4 |
|---|---|---|---|
| (M1) | | | |
| Sample (A1) | 7.28 | 10.65 | 14.20 |
| Silicone Resin 1 | 6.92 | 3.55 | 0.00 |
| Vinyltrimethoxysilane | 0.50 | 0.50 | 0.50 |
| Aminopropyltrimethoxysilane | 1 | 1 | 1 |
| DMP-30 | 0.50 | 0.50 | 0.50 |
| (D-1) | 8.38 | 8.38 | 8.38 |
| (D-2) | 25.14 | 25.14 | 25.14 |
| (D-3) | 50.28 | 50.28 | 50.28 |
| viscosity (10 1/s) mPa.s | 70,240 | 70,240 | 70,240 |
| Filling rate | 84% | 87% | 84% |

| (M2) | | | |
|---|---|---|---|
| Bisphenol A epoxy resin | 13.20 | 13.20 | 13.20 |
| (D-1) | 8.63 | 8.63 | 8.63 |
| (D-2) | 25.89 | 25.89 | 25.89 |
| (D-3) | 51.78 | 51.78 | 51.78 |
| H₂O | 0.50 | 0.50 | 0.50 |
| viscosity (10 1/s) mPa.s | 802,000 | | |
| Filling rate | 86% | 86% | 86% |

According to DIN 53019, the kinematic viscosity of components M1 and M2 in Table 1 was measured using Anton Paar MCR302 instrument, respectively. Components M1 and M2 were mixed and immediately tested for kinematic and static viscosity of the compositions of the present invention.

The composition was cured at room temperature and 50% humidity. According to GB/T 7124-2008, the bond strength of the product was tested after 24 hours and 14 days after curing, respectively.

**Table 2**

| | Ex.1 | C.Ex.2 | C.Ex.4 |
|---|---|---|---|
| mixture viscosity (10 1/s) | 384,400 | | |
| Thermal conductivity (W/m·K) | 2.50 | 2.50 | 2.50 |
| Initial Bonding strength (after 24h Mpa) | 1.40 | 1.00 | 1.00 |
| Final Bonding strength (after 14d Mpa) | 7.00 | 2.00 | 2.60 |

It can be seen from Table 2 that C.Ex.4 without silicone resin has poor adhesion performance.

When a higher amount of component (E) silicone resin is used, ie the weight ratio of component (E) silicone resin to component (A) silane-crosslinked polymer is 0.95, the composition of Ex.1 shows good Final Bonding strength. When the above weight ratio is 0.33, the adhesion performance of the composition obtained by C.Ex.2 is significantly lower than that of the composition of Ex.1.

## Claims

1. A composition (M), which contains
Component (A) silane-crosslinking polymer,
Component (B1) epoxy resin,
Component (B2) epoxy resin curing agent,
Optional component (C) an organosilicon compound that not having nitrogen atoms bonded directly to carbonyl groups,
component (D) filler,
component (E) silicone resin,
wherein, the weight ratio of component (E) silicone resin to component (A) silane-crosslinking polymer is greater than or equal to 0.5, preferably between 0.55-5, more preferably between 0.6-4.

2. The composition(M) according to claim 1, wherein the filling rate of the thermally conductive filler is greater than or equal to 0.80, preferably greater than or equal to 0.82, preferably greater than or equal to 0.84.

3. The composition(M) according to claim 1 or 2, component (D) comprising
5-20wt% (D-1) Thermal conductive fillers with an average particle size greater than or equal to 0.1 µm and less than or equal to 4 µm; preferably aluminum hydroxide and/or aluminum oxide,
18-37wt% (D-2) Thermal conductive fillers with an average particle size greater than or equal to 4µm and less than or equal to 20µm; preferably aluminum hydroxide and/or aluminum oxide,
48-65wt% (D-3) thermal conductive fillers with an average particle size greater than or equal to 35 µm and less than or equal to 60 µm, preferably aluminum hydroxide and/or aluminum oxide,
in (D-1), (D-2) and (D-3), the (D) component in the composition is calculated as 100 wt%, wherein the average particle size is measured by the relevant method in the description.

4. The composition(M) according to any in claim 1-3, wherein the sum of the amount of component (A) silane-crosslinking polymer and component (E) silicone resin is greater than 5wt%, preferably between 5 and 15wt%, more preferably between 5 and 10wt%, based on the total amount of the compositions (M) is calculated as 100wt%.

5. The composition(M) according to any in claim 1-4, wherein the sum of component (A) silane-crosslinked polymer, component (E) silicone resin, component (B1) epoxy resin and component (B2) epoxy resin curing agent is greater than 5wt%, preferably between 5-30wt%, more preferably between 5-20wt%, more preferably between 10-20wt%, based on the total amount of the compositions (M) is calculated as 100wt%.

6. The composition(M) according to any in claim 1-5, wherein the water content in the compositions (M) is 0.1-10 parts by weight, more preferably 6-10 parts by weight, based on 100 parts by weight of components (A).

7. The composit tion(M) according to any in claim 1-6, which contains
| | |
|---|---|
| 1-20 wt% | component (A) silane-crosslinking polymer, |
| 1-20 wt% | component (B1) epoxy resin, |
| 0.1-1 wt% | component (B2) epoxy resin curing agent, |
| Optional | component (C) An organosilicon compound that not having nitrogen atomsbonded directly to carbonyl groups, |
| 75-85 wt% | component (D) thermally conductive filler, |
| 1-10 wt% | component (E) silicone resin, and the totalamount of all the compositions (M) is calculated as 100wt%. |

8. The composition(M) according to any in claim 1-7, which is a two-component composition, comprising
Component (M1)
| | |
|---|---|
| | |
| 3-10 wt% | component (A) silane-crosslinking polymer, |
| 0.1-0.5 wt% | component (B2) epoxy resin curing agent, |
| 0.1-1 wt% | component (C) An organosilicon compound that not having nitrogen atoms bondeddirectly to carbonyl groups, |
| 32.5-42.5 wt% | component (D) thermally conductive filler, |
| 3-10 wt% | component (E) silicone resin, |
Component (M2)
| | |
|---|---|
| 3-10 wt% | component (B1) epoxy resin, |
| 32.5-42.5 wt% | component (D) thermally conductive filler, |
| 0.1-0.5 wt% | water |
the total amount of all compositions (M) is calculated as 100wt%.

9. The composition(M) according to any in claim 1-8, after curing at room temperature with 50% humidity, according to GB/T 7124-2008 24-hour initial bonding strength is greater than or equal to 1Mpa, 14-day final bonding strength is greater than or equal to 6Mpa.

10. A method, wherein the composition(M) according to any in claim 1-9 is applied and/or caulked and/or potted into gaps between substrates and/or electronic devices before being crosslinked and/or cured.

## Patentansprüche

1. Zusammensetzung (M), die enthält
Komponente (A) silanvernetzendes Polymer,
Komponente (B1) Epoxyharz,
Komponente (B2) Epoxyharzhärter,
gegebenenfalls Komponente (C), eine Organosiliciumverbindung, die keine direkt an Carbonylgruppen gebundene Stickstoffatome aufweist,
Komponente (D) Füllstoff,
Komponente (E) Siliconharz,
wobei das Gewichtsverhältnis von Komponente (E), Siliconharz, zu Komponente (A), silanvernetzendes Polymer, größer als oder gleich 0,5 ist, vorzugsweise zwischen 0,55 und 5, bevorzugter zwischen 0,6 und 4, beträgt.

2. Zusammensetzung (M) nach Anspruch 1, wobei die Füllrate des wärmeleitfähigen Füllstoffs größer als oder gleich 0,80, vorzugsweise größer als oder gleich 0,82, vorzugsweise größer als oder gleich 0,84, ist.

3. Zusammensetzung (M) nach Anspruch 1 oder 2, wobei Komponente (D) umfasst
5-20 Gew.-% (D-1) wärmeleitfähige Füllstoffe mit einer mittleren Partikelgröße von größer als oder gleich 0,1 µm und kleiner als oder gleich 4 µm; vorzugsweise Aluminiumhydroxid und/oder Aluminiumoxid,
18-37 Gew.-% (D-2) wärmeleitfähige Füllstoffe mit einer mittleren Partikelgröße von größer oder gleich 4 µm und kleiner als oder gleich 20 µm; vorzugsweise Aluminiumhydroxid und/oder Aluminiumoxid,
48-65 Gew.-% (D-3) wärmeleitfähige Füllstoffe mit einer mittleren Partikelgröße von größer oder gleich 35 µm und kleiner als oder gleich 60 µm, vorzugsweise Aluminiumhydroxid und/oder Aluminiumoxid,
wobei bei (D-1), (D-2) und (D-3) die (D)-Komponente in der Zusammensetzung als 100 Gew.-% berechnet wird, wobei die mittlere Partikelgröße durch das entsprechende Verfahren in der Beschreibung gemessen wird.

4. Zusammensetzung (M) nach einem der Ansprüche 1-3, wobei die Summe der Menge von Komponente (A), silanvernetzendes Polymer, und Komponente (E), Siliconharz, größer als 5 Gew.-% ist, vorzugsweise zwischen 5 und 15 Gew.-%, bevorzugter zwischen 5 und 10 Gew.-%, beträgt, bezogen auf die Gesamtmenge der Zusammensetzung (M), die als 100 Gew.-% berechnet wird.

5. Zusammensetzung (M) nach einem der Ansprüche 1-4, wobei die Summe von Komponente (A), silanvernetztes Polymer, Komponente (E) Siliconharz, Komponente (B1) Epoxyharz und Komponente (B2) Epoxyharz-Härtungsmittel größer als 5 Gew.-% ist, vorzugsweise zwischen 5 und 30 Gew.-%, bevorzugter zwischen 5 und 20 Gew.-%, bevorzugter zwischen 10 und 20 Gew.-%, beträgt, bezogen auf die Gesamtmenge der Zusammensetzung (M), die als 100 Gew.-% berechnet wird.

6. Zusammensetzung (M) nach einem der Ansprüche 1-5, wobei der Wassergehalt in den Zusammensetzungen (M) 0,1-10 Gewichtsteile, bevorzugter 6-10 Gewichtsteile, bezogen auf 100 Gewichtsteile der Komponenten (A) beträgt.

7. Zusammensetzung (M) nach einem der Ansprüche 1-6, die enthält 1-20 Gew.-% Komponente (A) silanvernetzendes Polymer, 1-20 Gew.-% Komponente (B1) Epoxyharz, 0,1-1 Gew.-% Komponente (B2) Epoxyharzhärter, gegebenenfall Komponente (C), eine Organosiliciumverbindung, die keine direkt an Carbonylgruppen gebundene Stickstoffatome aufweist, 75-85 Gew.-% Komponente (D) wärmeleitfähiger Füllstoff, 1-10 Gew.-% Komponente (E) Siliconharz, wobei die Gesamtmenge aller Zusammensetzungen (M) als 100 Gew.-% berechnet ist.

8. Zusammensetzung (M) nach einem der Ansprüche 1-7, die eine Zweikomponentenzusammensetzung ist, umfassend Komponente (M1) 3-10 Gew.-% Komponente (A) silanvernetzendes Polymer, 1-0,5 Gew.-% Komponente (B2) Epoxyharzhärter, 0,1-1 Gew.-% Komponente (C), eine Organosiliciumverbindung, die keine direkt an Carbonylgruppen gebundene Stickstoffatome aufweist, 32,5-42,5 Gew.-% Komponente (D) wärmeleitfähiger Füllstoff, 3-10 Gew.-% Komponente (E) Siliconharz, Komponente (M2) 3-10 Gew.-% Komponente (B1) Epoxyharz, 32,5-42,5 Gew.-% Komponente (D) wärmeleitfähiger Füllstoff, 0,1-0,5 Gew.-% Wasser wobei die Gesamtmenge aller Zusammensetzungen (M) als 100 Gew.-% berechnet ist.

9. Zusammensetzung (M) nach einem der Ansprüche 1-8, wobei nach Härten bei Raumtemperatur mit 50 % Feuchtigkeit nach GB/T 7124-2008 die 24-Stunden-Anfangsbindungsfestigkeit höher als oder gleich 1 MPa ist, die 14-Tage-Endbindungsfestigkeit höher als oder gleich 6 MPa ist.

10. Verfahren, wobei die Zusammensetzung (M) nach einem der Ansprüche 1-9 in Lücken zwischen Substraten und/oder elektronischen Vorrichtungen aufgebracht und/oder verfugt und/oder vergossen wird, bevor sie vernetzt und/oder gehärtet wird.

## Revendications

1. Composition (M), qui contient
composant (A) polymère de réticulation de silane,
composant (B1) résine époxy,
composant (B2) agent de durcissement de résine époxy,
composant éventuel (C) un composé organosilicium qui n'a pas d'atomes d'azote liés directement à des groupes carbonyle,
composant (D) charge,
composant (E) résine de silicone,
dans laquelle le rapport pondéral du composant (E) résine de silicone sur le composant (A) polymère de réticulation de silane est supérieur ou égal à 0,5, de préférence entre 0,55 et 5, plus préférablement entre 0,6 et 4.

2. Composition (M) selon la revendication 1, dans laquelle le taux de remplissage de la charge thermiquement conductrice est supérieur ou égal à 0,80, de préférence supérieur ou égal à 0,82, de préférence supérieur ou égal à 0,84.

3. Composition (M) selon la revendication 1 ou 2, le composant (D) comprenant
5 à 20 % en poids (D-1) de charges thermoconductrices ayant une taille moyenne de particule supérieure ou égale à 0,1 µm et inférieure ou égale à 4 µm ; de préférence de l'hydroxyde d'aluminium et/ou de l'oxyde d'aluminium, 18 à 37 % en poids (D-2) de charges thermoconductrices ayant une taille moyenne de particule supérieure ou égale à 4 µm et inférieure ou égale à 20 µm ; de préférence de l'hydroxyde d'aluminium et/ou de l'oxyde d'aluminium,
48 à 65 % en poids (D-3) de charges thermoconductrices ayant une taille moyenne de particule supérieure ou égale à 35 µm et inférieure ou égale à 60 µm, de préférence de l'hydroxyde d'aluminium et/ou de l'oxyde d'aluminium,
dans (D-1), (D-2) et (D-3), le composant (D) dans la composition est calculé comme 100 % en poids, la taille moyenne de particule étant mesurée par le procédé pertinent dans la description.

4. Composition (M) selon l'une quelconque des revendications à 3, dans laquelle la somme de la quantité du composant (A) polymère de réticulation de silane et du composant (E) résine de silicone est supérieure à 5 % en poids, de préférence entre 5 et 15 % en poids, plus préférablement entre 5 et 10 % en poids, sur la base de la quantité totale des compositions (M) qui est calculée comme 100 % en poids.

5. Composition (M) selon l'une quelconque des revendications 1 à 4, dans laquelle la somme du composant (A) polymère réticulé par un silane, du composant (E) résine silicone, du composant (B1) résine époxy et du composant (B2) agent de durcissement de résine époxy est supérieure à 5 % en poids, de préférence entre 5 et 30 % en poids, plus préférablement entre 5 et 20 % en poids, plus préférablement entre 10 et 20 % en poids, sur la base de la quantité totale des compositions (M) qui est calculée comme 100 % en poids.

6. Composition (M) selon l'une quelconque des revendications 1 à 5, dans laquelle la teneur en eau dans les compositions (M) est de 0,1 à 10 parties en poids, plus préférablement 6 à 10 parties en poids, sur la base de 100 parties en poids de composants (A).

7. Composition (M) selon l'une quelconque des revendications 1 à 6, qui contient
1 à 20 % en poids de composant (A) polymère de réticulation de silane,
1 à 20% en poids de composant (B1) résine époxy,
0,1 à 1 % en poids du composant (B2) agent de durcissement de résine époxy,
composant éventuel (C) un composé organosilicium qui n'a pas d'atomes d'azote liés directement à des groupes carbonyle,
75 à 85 % en poids de composant (D) charge thermiquement conductrice,
1 à 10 % en poids de composant (E) résine de silicone,
et la quantité totale de toutes les compositions (M) est calculée comme 100 % en poids.

8. Composition (M) selon l'une quelconque des revendications 1 à 7, qui est une composition à deux composants, comprenant
composant (M1)
3 à 10 % en poids de composant (A) polymère de réticulation de silane,
1 à 0,5 % en poids du composant (B2) agent de durcissement de résine époxy,
0,1 à 1 % en poids de composant (C) un composé organosilicium qui n'a pas d'atomes d'azote liés directement à des groupes carbonyle,
32,5 à 42,5 % en poids de composant (D) charge thermiquement conductrice,
3 à 10 % en poids de composant (E) résine de silicone, composant (M2)
3 à 10% en poids de composant (B1) résine époxy,
32,5 à 42,5 % en poids de composant (D) charge thermiquement conductrice,
0,1 à 0,5 % en poids d'eau
la quantité totale de toutes les compositions (M) est calculée comme 100 % en poids.

9. Composition (M) selon l'une quelconque des revendications 1 à 8, après durcissement à température ambiante avec 50 % d'humidité, selon la norme GB/T 7124-2008 la force de liaison initiale à 24 heures est supérieure ou égale à 1 MPa, la force de liaison finale à 14 jours est supérieure ou égale à 6 MPa.

10. Procédé, dans lequel la composition (M) selon l'une quelconque des revendications 1 à 9 est appliquée et/ou calfeutrée et/ou enrobée dans des interstices entre des substrats et/ou des dispositifs électroniques avant d'être réticulée et/ou durcie.
